# EUROPEAN PATENT SPECIFICATION

(11) **EP 4 462 567 B1**
(45) Date of publication and mention of the grant of the patent: **11.11.2026**
(21) Application number: 23898364.7
(22) Date of filing: 01.12.2023
(51) Int. Cl.: H01M 10/613, H01M 50/271, H01M 50/262, H01M 50/204, H01M 10/6556, H01M 50/209, H01M 50/289

(54) **BATTERY PACK**
BATTERIEPACK
BLOC-BATTERIE

(30) Priority: 01.12.2022 KR 20220165822; 07.03.2023 KR 20230029827
(43) Date of publication of application: 13.11.2024
(73) Proprietor: LG Energy Solution, Ltd., Seoul 07335 (KR)
(72) Inventor: HUR, Nam Hoon, Daejeon 34122 (KR); YANG, Chang Hyeon, Daejeon 34122 (KR); SHIN, Ju Hwan, Daejeon 34122 (KR); SEONG, Jun Yeob, Daejeon 34122 (KR); LEE, Hyoung Suk, Daejeon 34122 (KR)
(74) Representative: Plasseraud IP
(86) International application number: PCT/KR2023/019642
(87) International publication number: WO 2024/117841

(56) References cited:
- CN-A- 115 243 912
- CN-B- 103 917 394
- CN-U- 213 636 194
- JP-A- 2013 080 650
- JP-A- 2015 510 230
- JP-A- 2018 163 741
- JP-A- 2019 197 648
- KR-A- 20200 033 779
- US-A1- 2020 152 927
- US-A1- 2022 212 530
- US-B2- 9 929 389

## Description

### [Technical Field]

The present invention relates to a battery pack.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

Documents CN 115 243 912 A, US 2020/152927 A1 and US 9 929 389 B2 disclose battery packs with a bottom cover plate fixed by bolts.

### [Disclosure]

### [Technical Problem]

The present invention is directed to providing a battery pack with improved safety and energy density.

### [Technical Solution]

To address the above-described problem, the invention provides a battery pack according to claim 1.

The battery pack after the invention may present one or more feature(s) of dependent claims 2 to 12.

### [Advantageous Effects]

According to example embodiments of the present invention, a plurality of fastening members for fixing a cover plate and a housing can be inserted into the housing from a lower side of the cover plate. Therefore, the cover plate and the housing can be fixed without additional elements such as a bracket, thus improving energy density of a battery pack. In addition, a plurality of fastening members can be prevented from interfering with battery cells mounted on the housing, thereby enhancing safety of the battery pack.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a top view of a battery pack according to example embodiments.
FIG. 2 is a bottom view of a battery pack according to example embodiments.
FIG. 3 is a cross-sectional view taken along line 2I-2I' of FIG. 2.
FIG. 4 is a bottom view of a battery pack according to example embodiments.
FIG. 5 is a cross-sectional view taken along line 4I-4I' of FIG. 4.
FIG. 6 is a bottom view of a battery pack according to example embodiments.
FIG. 7 is a cross-sectional view taken along line 6I-6I' of FIG. 6.
FIG. 8 is a bottom view of a battery pack according to example embodiments.
FIG. 9 is a cross-sectional view taken along line 8I-8I' of FIG. 8.
FIG. 10 is a bottom view of a battery pack according to example embodiments.
FIG. 11 is a cross-sectional view taken along line 10I-10I' of FIG. 10.
FIG. 12 illustrates a part corresponding to FIG. 3.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

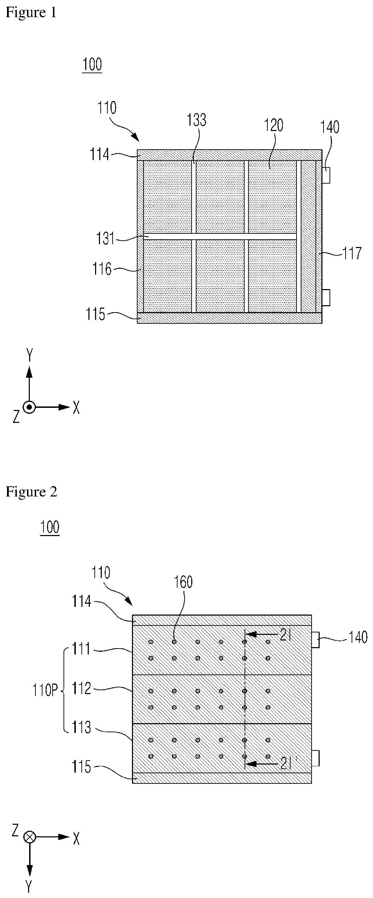

FIG. 1 is a top view of a battery pack 100 according to example embodiments.

FIG. 2 is a bottom view of the battery pack 100 according to example embodiments. In FIG. 2, a cover plate 150 is omitted for more complete understanding of the present invention.

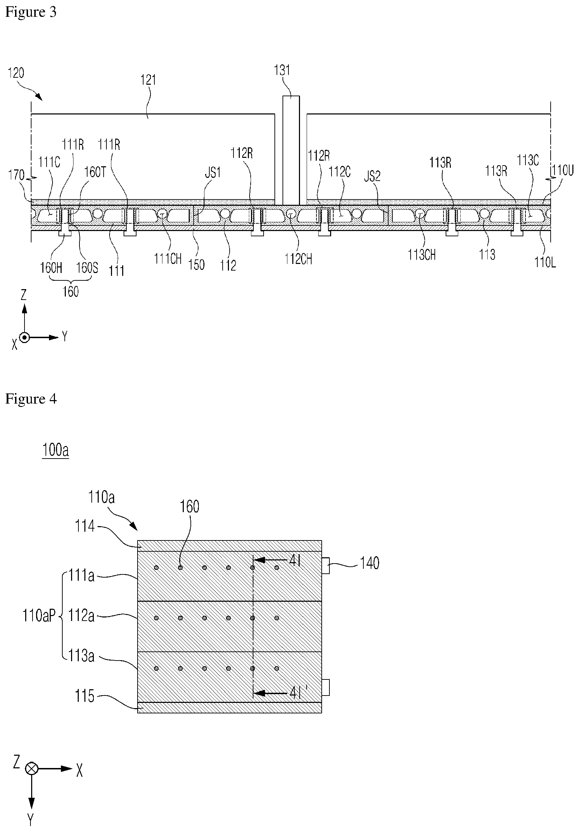

FIG. 3 is a cross-sectional view taken along line 2I-2I' of FIG. 2.

Referring to FIGS. 1 to 3, the battery pack 100 may include a housing 110, a plurality of battery devices 120, a center beam 131, a plurality of cross-beams 133, a plurality of exhaust devices 140, the cover plate 150, a plurality of fastening members 160, and a thermal interface material (TIM) 170. The battery pack 100 is a final form of a battery system mounted on a mobility or the like.

The housing 110 may provide a space in which the plurality of battery devices 120 are mounted. The housing 110 may include a first plate 111, a second plate 112, a third plate 113, a first side wall 114, a second side wall 115, a third side wall 116, and a fourth side wall 117.

The first to third plates 111, 112, and 113 may form a plate part 110P. The plate part 110P may include an upper side 110U and a lower side 110L that are substantially parallel to each other. Two directions substantially parallel to the upper side 110U of the plate part 110P are defined as an X-axis direction and a Y-axis direction, and a direction substantially perpendicular to the plate part 110P of the housing 110 is defined as a Z-axis direction. The X-axis direction, the Y-axis direction, and the Z-axis direction may be substantially perpendicular to one another. Unless otherwise mentioned, the definition of direction will apply to the following drawings.

The first plate 111 may be in contact with the second plate 112, and the second plate 112 may be in contact with the third plate 113. The first to third plates 111, 112, and 113 may be coupled by, for example, friction stir welding. The first plate 111 may be welded to the second plate 112, and the second plate 112 may be welded to the third plate 113. Accordingly, the plate part 110P may include a first welded surface JS1 that is a boundary surface between the first plate 111 and the second plate 112, and a second welded surface JS2 that is a boundary surface between the second plate 112 and the third plate 113.

The first plate 111 may include a plurality of channels 111CH, a plurality of cavities 111C, and a plurality of ribs 111R. Each of the plurality of channels 111CH, the plurality of cavities 111C, and the plurality of ribs 111R may extend in the X-axis direction.

According to example embodiments, the plurality of channels 111CH may provide a path in which a fluid for cooling the battery pack 100 flows. The plurality of channels 111CH may be spaced apart from each other in the Y-axis direction. The plurality of channels 111CH may be arranged in the Y-axis direction.

The plurality of cavities 111C are empty spaces formed in the first plate 111. By forming the plurality of cavities 111C, the mass of the first plate 111 may be reduced and thus the energy density of the battery pack 100 may improve. The plurality of cavities 111C may be interposed between the plurality of channels 111CH and the plurality of ribs 111R.

The plurality of ribs 111R may be interposed between the plurality of channels 111CH. The plurality of ribs 111R and the plurality of channels 111CH may be alternately arranged in the Y-axis direction. The plurality of ribs 111R are lattices for maintaining the rigidity of the first plate 111. A width of the plurality of ribs 111R may be in a range of about 5 mm to about 20 mm.

The second plate 112 may include a plurality of channels 112CH, a plurality of cavities 112C, and a plurality of ribs 112R. Each of the plurality of channels 112CH, the plurality of cavities 112C, and the plurality of ribs 112R may extend in the X-axis direction.

According to example embodiments, the plurality of channels 112CH may provide a path in which a fluid for cooling the battery pack 100 flows. The plurality of channels 112CH may be spaced apart from each other in the Y-axis direction. The plurality of channels 112CH may be arranged in the Y-axis direction.

The plurality of cavities 112C are empty spaces formed in the second plate 112. By forming the plurality of cavities 112C, the mass of the second plate 112 may be reduced and thus the energy density of the battery pack 100 may improve. The plurality of cavities 112C may be interposed between the plurality of channels 112CH and the plurality of ribs 112R.

The plurality of ribs 112R may be interposed between the plurality of channels 112CH. The plurality of ribs 112R and the plurality of channels 112CH may be alternately arranged in the Y-axis direction. The plurality of ribs 112R are lattices for maintaining the rigidity of the second plate 112. A width of the plurality of ribs 112R may be in a range of about 5 mm to about 20 mm.

The third plate 113 may include a plurality of channels 113CH, a plurality of cavities 113C, and a plurality of ribs 113R. Each of the plurality of channels 113CH, the plurality of cavities 113C, and the plurality of ribs 113R may extend in the X-axis direction.

According to example embodiments, the plurality of channels 113CH may provide a path in which a fluid for cooling the battery pack 100 flows. The plurality of channels 113CH may be spaced apart from each other in the Y-axis direction. The plurality of channels 113CH may be arranged in the Y-axis direction.

The plurality of cavities 113C are empty spaces formed in the third plate 113. By forming the plurality of cavities 113C, the mass of the third plate 113 may be reduced and thus the energy density of the battery pack 100 may improve. The plurality of cavities 113C may be interposed between the plurality of channels 113CH and the plurality of ribs 113R.

The plurality of ribs 113R may be interposed between the plurality of channels 113CH. The plurality of ribs 113R and the plurality of channels 113CH may be alternately arranged in the Y-axis direction. The plurality of ribs 113R are lattices for maintaining the rigidity of the third plate 113. A width of the plurality of ribs 113R may be in a range of about 5 mm to about 20 mm.

The plurality of battery devices 120 may be on the upper side 110U of the plate part 110P of the housing 110. The plate part 110P may support the plurality of battery devices 120. The first to fourth side walls 114, 115, 116, and 117 may horizontally surround the plurality of battery devices 120. The first to fourth side walls 114, 115, 116, and 117 may protect the plurality of battery devices 120.

The first and second side walls 114 and 115 may be substantially perpendicular to the Y-axis direction. The third and fourth side walls 116 and 117 may be substantially perpendicular to the X-axis direction. Lower sides of the first and second side walls 114 and 115 may be coplanar with the lower side 110L of the plate part 110P. The third and fourth side walls 116 and 117 may be on the plate part 110P.

Hereinafter, the technical idea of the present invention will be described with reference to an embodiment in which the battery pack 100 is a module-less type and each of the plurality of battery devices 120 does not include a module frame. However, the above description is intended to provide a non-limiting example and thus should not be understood as limiting the technical idea of the present invention in any sense. A plurality of battery devices including a module frame and a module type battery pack including the same will be easily derived by those of ordinary skill in the art, based on the above description.

Each of the plurality of battery devices 120 may include a plurality of battery cells 121. The plurality of battery cells 121 may be connected in series or parallel to each other to form a battery assembly. Each of the plurality of battery devices 120 may further include a bus bar plate and an end plate.

The plurality of battery cells 121 are basic units of a lithium ion battery, i.e., a secondary battery. Each of the plurality of battery cells 121 includes an electrode assembly, an electrolyte, and a case. The plurality of battery cells 121 are classified into a lithium ion battery, a lithium ion polymer battery, a lithium polymer battery or the like according to a configuration of the electrode assembly and the electrolyte. A market share of lithium ion polymer batteries in the field of secondary battery is increasing due to a low possibility of leakage of an electrolyte and easiness in manufacturing.

Each of the plurality of battery cells 121 may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

According to example embodiments, the plurality of battery cells 121 may be connected in series and/or in parallel. For example, the plurality of battery cells 121 may be connected in series to each other. As another example, the plurality of battery cells 121 may be connected in parallel with each other. As another example, the plurality of battery cells 121 connected in parallel with each other may form groups, and the groups of the plurality of battery cells 121 may be connected in series.

Each of negative electrode leads of the battery cells 121 connected in series may be coupled to a positive electrode lead of a following battery cell 121. Each of the negative electrode leads of the battery cells 121 connected in series may be welded to the positive electrode lead of the following battery cell 121.

Positive electrode leads of the plurality of battery cells 121 connected in parallel may be coupled to each other, and negative electrode leads of the plurality of battery cells 121 may be coupled to each other. The positive electrode leads of the plurality of battery cells 121 connected in parallel may be welded to each other, and the negative electrode leads of the plurality of battery cells 121 may be welded to each other.

The plurality of battery devices 120 may be arranged in the X-axis direction and the Y-axis direction. In FIG. 1, the number of battery devices 120 arranged in the X-axis direction is three, and the number of battery devices 120 arranged in the Y-axis direction is two. Accordingly, an array of the plurality of battery devices 120 may be referred to as a 3x2 array. The plurality of battery devices 120 arranged in an array of an M*N array (here, M and N are each an integer of 2 or more) will be easily derived by those of ordinary skill in the art, based on the above description.

The TIM 170 may be interposed between the battery cells 121 and the upper side 110U of the plate part 110P. The TIM 170 may be configured to mediate heat between the battery cells 121 and the plate part 110P. The TIM 170 may prevent the formation of an air layer between the battery cells 121 and the plate part 110P. The TIM 170 may fix the battery cells 121 and the plate part 110P to each other. The TIM 170 may include polyurethane or silicone.

The center beam 131 and the plurality of cross-beams 133 may isolate elements mounted on the housing 110 from each other. Accordingly, the center beam 131 and the plurality of cross-beams 133 may prevent an undesired short circuit from occurring between the plurality of battery devices 120 while protecting the plurality of battery devices 120.

The center beam 131 may be between the third and fourth side walls 116 and 117 facing each other. The center beam 131 may extend in the X-axis direction. The center beam 131 may be in contact with the third side wall 116 and be spaced apart from the fourth side wall 117. The center beam 131 may isolate the plurality of battery devices 120 from each other. The center beam 131 may be interposed between the plurality of battery devices 120.

According to example embodiments, the plurality of cross-beams 133 may extend in a direction (e.g., the Y-axis direction) perpendicular to the center beam 131. According to example embodiments, the plurality of cross-beams 133 may extend between the first side wall 114 and the center beam 131 or between the second side wall 115 and the center beam 131. According to example embodiments, the plurality of cross-beams 133 may be in contact with one of the first and second side wall 114 and 115 and the center beam 131. The plurality of cross-beams 133 may isolate the plurality of battery devices 120 from each other. The plurality of cross-beams 133 may be interposed between the plurality of battery devices 120.

The arrangement of the center beam 131 and the cross-beams 133 illustrated in FIG. 1 and the arrangement of the plurality of battery devices 120 according to the above arrangement are non-limiting examples and thus should not be understood as limiting the technical idea of the present invention in any sense. A battery pack that includes various numbers and arrangements of a center beam, cross-beams, and battery devices will be easily derived by those of ordinary skill in the art, based on the above description.

The plurality of exhaust devices 140 may be coupled to the fourth side wall 117. The fourth side wall 117 may include a plurality of exhaust holes connected to the plurality of exhaust devices 140. The plurality of exhaust holes may be configured to provide a path for discharging a gas and heat from the inside of the battery pack 100.

The plurality of exhaust devices 140 may be configured to delay thermal propagation by discharging a high-temperature gas from the inside of the battery pack 100 to the outside when at least one of the plurality of battery devices 120 is in a thermal runway state.

Here, the thermal runaway state of the plurality of battery devices 120 is a state in which a change of temperature of the plurality of battery devices 120 accelerates the change of temperature, i.e., an uncontrollable positive feedback. The temperature of the plurality of battery devices 120 that are in the thermal runaway state sharply increase, and a large amount of highpressure gas and combustion debris are discharged.

The cover plate 150 may be on the lower side 110L of the plate part 110P of the housing 110. As a non-limiting example, the cover plate 150 may include, for example, aluminum. The cover plate 150 may protect the plate part 110P. The cover plate 150 may supplement rigidity to the plate part 110P.

According to example embodiments, the cover plate 150 may be fixed to the plate part 110P by the plurality of fastening members 160. According to example embodiments, the plurality of fastening members 160 may be arranged in a matrix form when viewed from the bottom. A plurality of fastening members 160 arranged in the X-axis direction may form an array extending in the X-axis direction. A plurality of arrays each including the plurality of fastening members 160 may be arranged in the Y-axis direction.

According to example embodiments, each of the plurality of fastening members 160 may be a bolt. According to example embodiments, each of the plurality of fastening members 160 may include a head part 160H and a shank 160S. The shank 160S of each of the plurality of fastening members 160 may include a first part with a screw thread 160T and a second part interposed between the first part and the head part 160H.

According to other example embodiments, the battery pack 100 may further include insert nuts such as helical inserts between the plate part 110P and the plurality of fastening members 160. The insert nuts are fixed to the plate part 110P of the housing, and may include a buried flange formed by a blind insert process or the like and embedded in the plate part 110P. Accordingly, each of the plurality of fastening members 160 may be coupled to the plate part 110P of the housing 110 by insert nuts, and mechanical reliability of the battery pack 100 may be improved.

According to example embodiments, the plurality of fastening members 160 may be inserted into the plate part 110P of the housing 110 from the cover plate 150. Therefore, the cover plate 150 and the housing 110 may be fixed without additional elements such as a bracket, thus improving energy density of the battery pack 100. In addition, the plurality of fastening members 160 may be prevented from interfering with the plurality of battery cells 121, thereby improving the safety of the battery pack 100.

According to example embodiments, the head parts 160H of the plurality of fastening members 160 may be in contact with the cover plate 150. According to example embodiments, the head parts 160H of the plurality of fastening members 160 may be in contact with a lower side of the cover plate 150. An upper side of the cover plate 150 faces the plate part 110P, and the lower side of the cover plate 150 is opposite to the upper side.

According to example embodiments, the shank 160S of each of the plurality of fastening members 160 may be coupled to a plurality of ribs 111R, 112R, or 113R of one of the first to third plates 111, 112, and 113. According to example embodiments, the plurality of ribs 111R, 112R, and 113R may include receiving grooves for accommodating the shanks 160S. Each of the receiving grooves may include a screw thread receiving part of a shape complementary to the shape of the screw thread 160T of the shank 160S. The screw thread receiving part may overlap the plurality of channels 111CH, 112CH, and 113CH horizontally (i.e., in the Y-axis direction). The screw thread receiving part may be at the same level as the plurality of channels 111CH, 112CH, and 113CH.

According to example embodiments, the plurality of fastening members 160 coupled to the first plate 111 and the plurality of channels 111CH may be alternately arranged. The plurality of cavities 111C may be interposed between the plurality of fastening members 160 coupled to the first plate 111 and the plurality of channels 111CH.

According to example embodiments, the plurality of fastening members 160 coupled to the second plate 112 and the plurality of channels 112CH may be alternately arranged. The plurality of cavities 112C may be interposed between the plurality of fastening members 160 coupled to the second plate 112 and the plurality of channels 112CH.

According to example embodiments, the plurality of fastening members 160 coupled to the third plate 113 and the plurality of channels 113CH may be alternately arranged. The plurality of cavities 113C may be interposed between the plurality of fastening members 160 coupled to the third plate 113 and the plurality of channels 113CH.

According to example embodiments, the plurality of fastening members 160 may be spaced apart from the first and second welded surfaces JS1 and JS2 horizontally (e.g., in the Y-axis direction). Strength of the first and second welded surfaces JS 1 and JS2 is less than that of the first to third plates 111, 112, and 113. According to example embodiments, the plurality of fastening members 160 may not be coupled to the first and second welded surfaces JS1 and JS2 to improve mechanical reliability of the battery pack 100.

The battery pack 100 may further include electronic components. The electronic components may be mounted on the housing 110. The electronic components may be between the fourth side wall 117 on which the exhaust devices 140 are installed and the plurality of battery devices 120. The electronic components may include an electronic device required to drive a battery pack.

The electronic components may include, for example, a battery management system (BMS). The BMS may be configured to monitor, balance, and control the battery pack. Monitoring of the battery pack 100 may include measuring voltages and currents of certain nodes inside the plurality of battery devices 120 and measuring temperatures at set positions in the battery pack 100. The battery pack 100 may include measuring instruments for measuring voltages, currents, and temperatures as described above.

Balancing of the battery pack 100 is an operation of reducing a deviation between the plurality of battery devices 120. Controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery devices 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery devices 120. The PRA may be configured to supply or cut off power from a high-voltage battery to an external load (e.g., a motor of a vehicle). The PRA may cut off power supply to an external load (e.g., a motor of a vehicle) to protect the plurality of battery devices 120 and the external load (e.g., a motor of a vehicle), when abnormal voltage such as voltage surge occurs.

The battery pack 100 may further include a plurality of bus bars configured to electrically connect the plurality of battery devices 120. The plurality of battery devices 120 may be connected in series by the plurality of bus bars. Accordingly, the battery pack 100 may be configured to output a high voltage to an external load (e.g., a motor of a vehicle).

The battery pack 100 may further include a lid plate coupled to the first to fourth side walls 114, 115, 116, and 117. The lid plate may cover elements mounted inside the battery pack 100 such as the battery devices 120 and electronic components. The lid plate may be fixed to the battery pack 100 by a mechanical coupling means such as a fastening member.

### (Second Embodiment)

FIG. 4 is a bottom view of a battery pack according to example embodiments. In FIG. 4, a cover plate 150 is omitted for more complete understanding of the present invention.

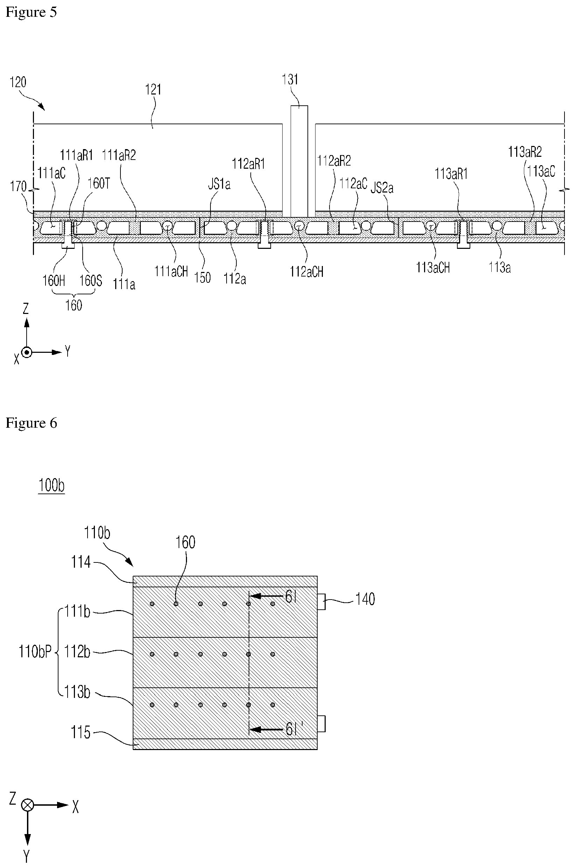

FIG. 5 is a cross-sectional view taken along line 41-41' of FIG. 4.

Referring to FIGS. 4 and 5, a battery pack 100a may include a housing 110a, a plurality of battery devices 120, a center beam 131, a plurality of cross-beams 133 (see FIG. 1), a plurality of exhaust devices 140, the cover plate 150, a plurality of fastening members 160, and a TIM 170. The battery pack 100a is a final form of a battery system mounted on a mobility or the like.

The plurality of battery devices 120, the center beam 131, and the plurality of cross-beams 133 (see FIG. 1), the plurality of exhaust devices 140, and the cover plate 150 are substantially the same as those described above with reference to FIGS. 1 to 3, and thus a redundant description thereof will be omitted.

According to example embodiments, the housing 110a may provide a space in which the plurality of battery devices 120 are mounted. The housing 110a may include a first plate 111a, a second plate 112a, a third plate 113a, a first side wall 114, a second side wall 115, a third side wall 116, and a fourth side wall 117. The first to fourth side walls 114, 115, 116, and 117 are substantially the same as those described above with reference to FIGS. 1 to 3 and thus a redundant description thereof will be omitted.

The first to third plates 111a, 112a, and 113a may form a plate part 110aP. The first plate 111a may be in contact with the second plate 112a, and the second plate 112a may be in contact with the third plate 113a. The first plate 111a may be welded to the second plate 112a, and the second plate 112a may be welded to the third plate 113a. The plate part 110aP may include a first welded surface JS1a that is a boundary surface between the first plate 111a and the second plate 112a, and a second welded surface JS2a that is a boundary surface between the second plate 112a and the third plate 113a.

The first plate 111a may include a plurality of channels 111aCH, a plurality of cavities 111aC, a first rib 111aR1, and a second rib 111aR2. Each of the plurality of channels 111aCH, the plurality of cavities 111aC, the first rib 111aR1, and the second rib 111aR2 may extend in the X-axis direction. According to example embodiments, a width of the first rib 111aR1 (e.g., in the Y-axis direction) may be substantially the same as that of the second rib 111aR2 (e.g., in the Y-axis direction).

The second plate 112 may include a plurality of channels 112aCH, a plurality of cavities 112aC, a first rib 112aR1, and a second rib 112aR2. Each of the plurality of channels 112aCH, the plurality of cavities 112aC, the first rib 112aR1, and the second rib 112aR2 may extend in the X-axis direction. According to example embodiments, a width of the first rib 111aR1 (e.g., in the Y-axis direction) may be substantially the same as that of the second rib 112aR2 (e.g., in the Y-axis direction).

The third plate 113a may include a plurality of channels 113aCH, a plurality of cavities 113aC, a first rib 113aR1, and a second rib 113aR2. Each of the plurality of channels 113aCH, the plurality of cavities 113aC, the first rib 113aR1, and the second rib 113aR2 may extend in the X-axis direction. According to example embodiments, a width of the first rib 113aR1 (e.g., in the Y-axis direction) may be substantially the same as that of the second rib 113aR2 (e.g., in the Y-axis direction).

Shapes, functions, and arrangements of the plurality of channels 111aCH, 112aCH, 113aCH, the plurality of cavities 111aC, 112aC, 113aC, and the first and second ribs 111aR1, 112aR1, 113aR1, 111aR2, 112aR2, and 113aR2 are substantially the same as those described above with reference to FIGS. 1 to 3, and thus, a redundant description will be omitted.

According to example embodiments, the cover plate 150 may be fixed to the plate part 110aP by the plurality of fastening members 160. According to example embodiments, the plurality of fastening members 160 may be arranged in a matrix form when viewed from the bottom. The plurality of fastening members 160 arranged in the X-axis direction may form an array extending in the X-axis direction. A plurality of arrays each including a plurality of fastening members 160 may be arranged in the Y-axis direction.

According to example embodiments, a shank 160S of each of the plurality of fastening members 160 may be coupled to one of the first ribs 111aR1, 112aR1, and 113aR1. According to example embodiments, the shank 160S of each of the plurality of fastening members 160 may not be coupled to the second ribs 111aR2, 112aR2 and 113aR2. According to example embodiments, the shank 160S of each of the plurality of fastening members 160 may be spaced apart from the second rib 111aR2, 112aR2 or 113aR2. According to example embodiments, the shank 160S of each of the plurality of fastening members 160 may be spaced apart from the first and second welded surfaces JS1a and JS2a.

According to example embodiments, the first ribs 111aR1, 112aR1, and 113aR1 may include a plurality of receiving groove for accommodating the shanks 160S. Each of the plurality of receiving grooves may include a screw thread receiving part of a shape complementary to the shape of the screw thread 160T of the shank 160S. The second ribs 111aR2, 112aR2, and 113aR2 may not include a receiving groove for accommodating the shank 160S.

According to example embodiments, the plurality of fastening members 160 are coupled to only the first ribs 111aR1, 112aR1, and 113aR1 and are not coupled to the second ribs 111aR2, 112aR2, and 113aR2. Accordingly, the housing 110a and the cover plate 150 can be reliably fixed, and the energy density of the battery pack 100a can be improved.

### (Third Embodiment)

FIG. 6 is a bottom view of a battery pack 100b according to example embodiments. In FIG. 6, a cover plate 150 is omitted for more complete understanding of the present invention.

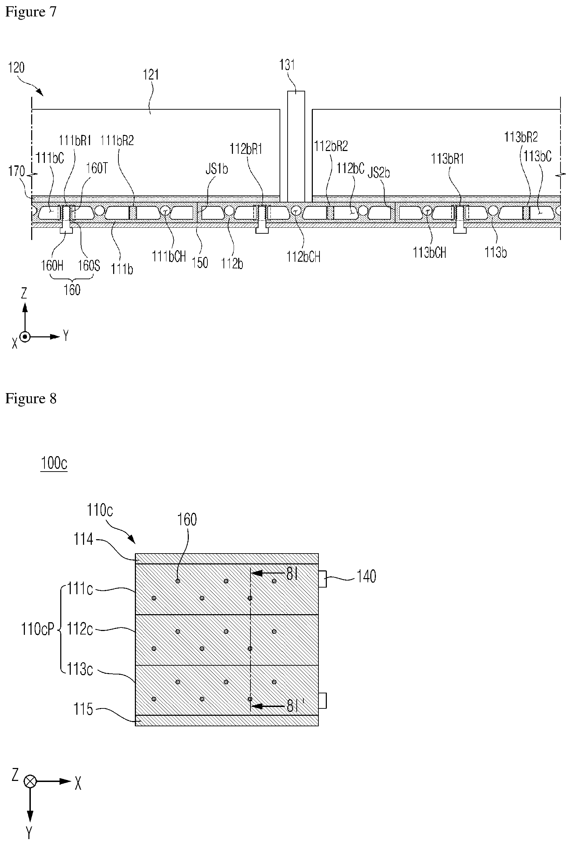

FIG. 7 is a cross-sectional view taken along line 6I-6I' of FIG. 6.

Referring to FIGS. 6 and 7, the battery pack 100b may include a housing 110b, a plurality of battery devices 120, a center beam 131, a plurality of cross-beams 133 (see FIG. 1), a plurality of exhaust devices 140, the cover plate 150, a plurality of fastening members 160, and a TIM 170. The battery pack 100b is a final form of a battery system mounted on a mobility or the like.

The plurality of battery devices 120, the center beam 131, and the plurality of cross-beams 133 (see FIG. 1), the plurality of exhaust devices 140, and the cover plate 150 are substantially the same as those described above with reference to FIGS. 1 to 3, and thus a redundant description thereof will be omitted.

According to example embodiments, the housing 110b may provide a space in which the plurality of battery devices 120 are mounted. The housing 110b may include a first plate 111b, a second plate 112b, a third plate 113b, a first side wall 114, a second side wall 115, a third side wall 116, and a fourth side wall 117. The first to fourth side walls 114, 115, 116, and 117 are substantially the same as those described above with reference to FIGS. 1 to 3 and thus a redundant description thereof will be omitted.

The first to third plates 111b, 112b, and 113b may form a plate part 110bP. The first plate 111b may be in contact with the second plate 112b, and the second plate 112b may be in contact with the third plate 113b. The first plate 111b may be welded to the second plate 112b, and the second plate 112b may be welded to the third plate 113b. The plate part 110bP may include a first welded surface JS1b that is a boundary surface between the first plate 111b and the second plate 112b, and a second welded surface JS2b that is a boundary surface between the second plate 112b and the third plate 113b.

The first plate 111b may include a plurality of channels 111bCH, a plurality of cavities 111bC, a first rib 111bR1, and a second rib 111bR2. Each of the plurality of channels 111aCH, the plurality of cavities 111bC, the first rib 111bR1, and the second rib 111bR2 may extend in the X-axis direction. According to example embodiments, a width of the first rib 111bR1 (e.g., in the Y-axis direction) may be different from that of the second rib 111bR2 (e.g., in the Y-axis direction). According to example embodiments, a width of the first rib 111bR1 (e.g., in the Y-axis direction) may be greater than that of the second rib 111bR2 (e.g., in the Y-axis direction).

The second plate 112b may include a plurality of channels 112bCH, a plurality of cavities 112bC, a first rib 112bR1, and a second rib 112bR2. Each of the plurality of channels 112bCH, the plurality of cavities 112bC, the first rib 112bR1, and the second rib 112bR2 may extend in the X-axis direction. According to example embodiments, a width of the first rib 112bR1 (e.g., in the Y-axis direction) may be different from that of the second rib 112bR2 (e.g., in the Y-axis direction). According to example embodiments, a width of the first rib 112bR1 (e.g., in the Y-axis direction) may be greater than that of the second rib 112bR2 (e.g., in the Y-axis direction).

The third plate 113b may include a plurality of channels 113bCH, a plurality of cavities 113bC, a first rib 113bR1, and a second rib 113bR2. Each of the plurality of channels 113bCH, the plurality of cavities 113bC, the first rib 113bR1, and the second rib 113bR2 may extend in the X-axis direction. According to example embodiments, a width of the first rib 113bR1 (e.g., in the Y-axis direction) may be different from that of the second rib 113bR2 (e.g., in the Y-axis direction). According to example embodiments, a width of the first rib 113bR1 (e.g., in the Y-axis direction) may be greater than that of the second rib 113bR2 (e.g., in the Y-axis direction).

Shapes, functions, and arrangements of the plurality of channels 111bCH, 112bCH, 113bCH, the plurality of cavities 111bC, 112bC, 113bC, and the first and second ribs 111bR1, 112bR1, 113bR1, 111bR2, 112bR2, and 113bR2 are substantially the same as those described above with reference to FIGS. 1 to 3, except for the widths of the first and second ribs 111bR1, 112bR1, 113bR1, 111bR2, 112bR2, and113bR2, and thus, a redundant description thereof will be omitted.

According to example embodiments, the cover plate 150 may be fixed to the plate part 110bP by the plurality of fastening members 160. According to example embodiments, the plurality of fastening members 160 may be arranged in a matrix form when viewed from the bottom. The plurality of fastening members 160 arranged in the X-axis direction may form an array extending in the X-axis direction. A plurality of arrays each consisting of a plurality of fastening members 160 may be arranged in the Y-axis direction.

According to example embodiments, a shank 160S of each of the plurality of fastening members 160 may be coupled to one of the first ribs 111bR1, 112bR1, and 113bR1. According to example embodiments, the shank 160S of each of the plurality of fastening members 160 may not be coupled to the second ribs 111aR2, 112aR2 and 113aR2. According to example embodiments, the shank 160S of each of the plurality of fastening members 160 may be spaced apart from the second rib 111aR2, 112aR2 or 113aR2. According to example embodiments, the shank 160S of each of the plurality of fastening members 160 may be spaced apart from the first and second welded surfaces JS1b and JS2b.

According to example embodiments, the first ribs 111bR1, 112bR1, and 113bR1 may include a plurality of receiving groove for accommodating the shanks 160S. Each of the plurality of receiving grooves may include a screw thread receiving part of a shape complementary to the shape of the screw thread 160T of the shank 160S. The second ribs 111aR2, 112aR2, and 113aR2 may not include a receiving groove for accommodating the shank 160S.

According to example embodiments, widths of the second ribs 111bR2, 112bR2, and 113bR2 to which the plurality of fastening members 160 are not coupled are less than those of the first ribs 111bR1, 112bR1, and 113bR1 to which the plurality of fastening members 160 are coupled. Accordingly, the housing 110b may be reduced in weight, and energy density of the battery pack 100b may be improved.

### (Fourth Embodiment)

FIG. 8 is a bottom view of a battery pack 100c according to example embodiments. In FIG. 8, a cover plate 150 is omitted for more complete understanding of the present invention.

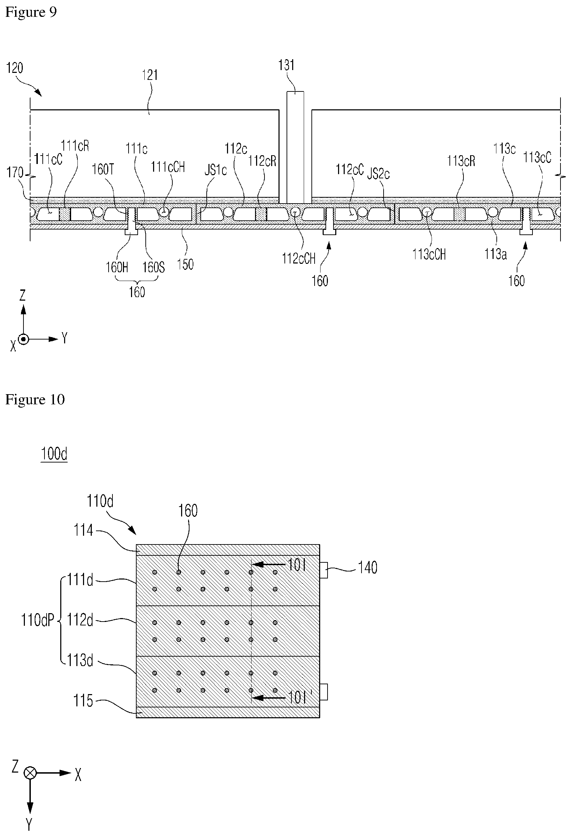

FIG. 9 is a cross-sectional view taken along line 8I-8I' of FIG. 8.

Referring to FIGS. 8 and 9, the battery pack 100c may include a housing 110c, a plurality of battery devices 120, a center beam 131, a plurality of cross-beams 133 (see FIG. 1), a plurality of exhaust devices 140, the cover plate 150, a plurality of fastening members 160, and a TIM 170. The battery pack 100c is a final form of a battery system mounted on a mobility or the like.

The plurality of battery devices 120, the center beam 131, and the plurality of cross-beams 133 (see FIG. 1), the plurality of exhaust devices 140, and the cover plate 150 are substantially the same as those described above with reference to FIGS. 1 to 3, and thus, a redundant description thereof will be omitted.

According to example embodiments, the housing 110c may provide a space in which the plurality of battery devices 120 are mounted. The housing 110c may include a first plate 111c, a second plate 112c, a third plate 113c, a first side wall 114, a second side wall 115, a third side wall 116, and a fourth side wall 117. The first to fourth side walls 114, 115, 116, and 117 are substantially the same as those described above with reference to FIGS. 1 to 3 and thus a redundant description thereof will be omitted.

The first to third plates 111c, 112c, and 113c may form a plate part 110cP. The first plate 111c may be in contact with the second plate 112c, and the second plate 112c may be in contact with the third plate 113c. The first plate 111c may be welded to the second plate 112c, and the second plate 112c may be welded to the third plate 113c. The plate part 110cP may include a first welded surface JS1c that is a boundary surface between the first plate 111c and the second plate 112c, and a second welded surface JS2c that is a boundary surface between the second plate 112c and the third plate 113c.

The first plate 111c may include a plurality of channels 111cCH, a plurality of cavities 111cC, and a plurality of ribs 111cR. The second plate 112c may include a plurality of channels 112cCH, a plurality of cavities 112cC, and a plurality of ribs 112cR. The third plate 113c may include a plurality of channels 113cCH, a plurality of cavities 113cC, and a plurality of ribs 113cR.

Shapes, functions, and arrangements of the plurality of channels 111cCH, 112cCH, and 113cCH, the plurality of cavities 111cC, 112cC, and 113cC, and the plurality of ribs 111cR, 112cR, and 113cR are substantially the same as those described above with reference to FIGS. 1 to 3 and thus a redundant description thereof will be omitted.

According to example embodiments, the cover plate 150 may be fixed to the plate part 110cP by the plurality of fastening members 160. According to example embodiments, the plurality of fastening members 160 may be arranged in a zigzag shape when viewed from the bottom.

According to example embodiments, a shank 160S of each of the plurality of fastening members 160 may be coupled to one of the first ribs 111cR1, 112cR1, and 113cR1. According to example embodiments, the shank 160S of each of the plurality of fastening members 160 may be spaced apart from the first and second welded surfaces JS1c and JS2c.

According to example embodiments, the first ribs 111cR1, 112cR1, and 113cR1 may include a plurality of receiving groove for accommodating the shanks 160S. Each of the plurality of receiving grooves may include a screw thread receiving part of a shape complementary to the shape of the screw thread 160T of the shank 160S.

According to example embodiments, by arranging the plurality of fastening members 160 in the zigzag shape, the number of required fastening members 160 can be reduced while reliably fixing the housing 110c and the cover plate 150. Accordingly, an energy density of the battery pack 100c can be improved.

### (Fifth Embodiment)

FIG. 10 is a bottom view of a battery pack according to example embodiments. In FIG. 10, a cover plate 150 is omitted for more complete understanding of the present invention.

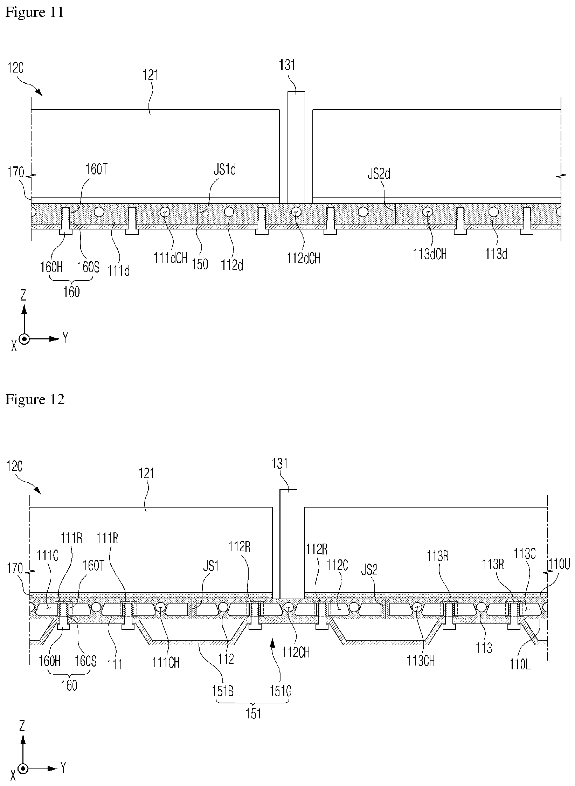

FIG. 11 is a cross-sectional view taken along line 10I-10I' of FIG. 10.

Referring to FIGS. 10 and 11, a battery pack 100d may include a housing 110d, a plurality of battery devices 120, a center beam 131, a plurality of cross-beams 133 (see FIG. 1), a plurality of exhaust devices 140, the cover plate 150, a plurality of fastening members 160, and a TIM 170. The battery pack 100d is a final form of a battery system mounted on a mobility or the like.

The plurality of battery devices 120, the center beam 131, and the plurality of cross-beams 133 (see FIG. 1), the plurality of exhaust devices 140, and the cover plate 150 are substantially the same as those described above with reference to FIGS. 1 to 3, and thus a redundant description thereof will be omitted.

According to example embodiments, the housing 110d may provide a space in which the plurality of battery devices 120 are mounted. The housing 110d may include a first plate 111d, a second plate 112d, a third plate 113d, a first side wall 114, a second side wall 115, a third side wall 116, and a fourth side wall 117. The first to fourth side walls 114, 115, 116, and 117 are substantially the same as those described above with reference to FIGS. 1 to 3 and thus a redundant description thereof will be omitted.

The first to third plates 111d, 112d, and 113d may form a plate part 110dP. The first plate 111d may be in contact with the second plate 112d, and the second plate 112d may be in contact with the third plate 113d. The first plate 111d may be welded to the second plate 112d, and the second plate 112d may be welded to the third plate 113d. The plate part 110dP may include a first welded surface JS1d that is a boundary surface between the first plate 111d and the second plate 112d, and a second welded surface JS2d that is a boundary surface between the second plate 112d and the third plate 113d.

The first plate 111d may include a plurality of channels 111dCH and a plurality of ribs 111dR. The second plate 112d may include a plurality of channels 112dCH and a plurality of ribs 112dR. The third plate 113d may include a plurality of channels 113dCH and a plurality of ribs 113dR. Shapes, functions and arrangements of the plurality of channels 111dCH, 112dCH, and 113dCH and the plurality of ribs 111dR, 112dR, and 113dR are substantially the same as those described above with reference to FIGS. 1 to 3 and thus a redundant description thereof will be omitted.

According to example embodiments, the first to third plates 111d, 112d, and 113d do not include cavities. Accordingly, mechanical strength of the housing 110d may improve. In addition, a position of the plate part 110dP to which the plurality of fastening members 160 are coupled may be freely determined, thereby enhancing a degree of freedom in designing the battery pack 100d.

According to example embodiments, the cover plate 150 may be fixed to the plate part 110dP by the plurality of fastening members 160. According to example embodiments, the plurality of fastening members 160 may be arranged in a matrix form when viewed from the bottom.

According to example embodiments, a shank 160S of each of the plurality of fastening members 160 may be coupled to one of the first to third plates 111d, 112d and 113d. According to example embodiments, the shank 160S of each of the plurality of fastening members 160 may be spaced apart from the first and second welded surfaces JS1d and JS2d.

According to example embodiments, the first plates 111d, 112d and 113d may include a plurality of receiving groove for accommodating the shanks 160S. Each of the plurality of receiving grooves may include a screw thread receiving part of a shape complementary to the shape of a screw thread 160T of the shank 160S.

### (Sixth Embodiment)

FIG. 12 illustrates a part corresponding to FIG. 3. In FIG. 12, elements except for a cover plate 151 are the same as those of FIG. 3 and thus a redundant description thereof will be omitted. The cover plate 151 of FIG. 12 may replace the cover plates 150 included in the battery pack 100 of FIG. 1, the battery pack 100a of FIG. 4, the battery pack 100b of FIG. 6, the battery pack 100c of FIG. 8, and the battery pack 100d of FIG. 10.

Referring to FIG. 12, the cover plate 151 may include a bottom part 151B and grooves 151G. The grooves 151G are portions for coupling a plurality of fastening members 160. The grooves 151G may be closer to a plate part 111P than the bottom part 151B. A head part 160H of each of the plurality of fastening members 160 may be in contact with one of the grooves 151G. The plurality of fastening members 160 may be spaced apart from the bottom part 151B. The grooves 151G may extend according to a design of a position to which the plurality of fastening members 160 are to be fastened and may have various planar shapes such as a line shape, a cross shape, and a grid shape. Due to the formation of the grooves 151G, the head part 160H of each of the plurality of fastening members 160 is above the bottom part 151B and thus stability of the battery pack 100 may improve.

## Claims

1. A battery pack (100) comprising:
a housing (110) having a plate part (110P);
a plurality of battery devices (120) on a first side of the plate part (110P) of the housing (110);
a cover plate (150) on a second side of the plate part (110P) of the housing (110); and
a plurality of fastening members (160) configured to fix the cover plate (150) and the housing (110),
wherein each of the plurality of fastening members (160) includes a head part (160H) and a shank (160S), a diameter of the shank (160S) being less than a diameter of the head part (160H), and
wherein the head part (160H) of each of the plurality of fastening members (160) is in contact with the cover plate (150),
wherein the housing (110) includes a plurality of channels (111CH, 112CH, 113CH) configured to allow a fluid to flow therethrough and extending in a first direction parallel to the first side of the plate part (110P) and a plurality of ribs (111R, 112R, 113R) interposed between the plurality of channels (111CH, 112CH, 113CH) and extending in the first direction
wherein the plurality of fastening members (160) are interposed between the plurality of channels (111CH, 112CH, 113CH) and are coupled to the plurality of ribs (111R, 112R, 113R),
**characterized in that** the housing (110) includes a plurality of first ribs (111aR1, 112aR1, 113aR1) and a plurality of second ribs (111aR2, 112aR2, 113aR2) that are interposed between the plurality of channels (111CH, 112CH, 113CH) and extending in the first direction, and
wherein each of the plurality of fastening members (160) is coupled to a corresponding first rib (111aR1, 112aR1, 113aR1) among the plurality of first ribs (111aR1, 112aR1, 113aR1), and
wherein each of the plurality of fastening members (160) is spaced apart from the plurality of second ribs (111aR2, 112aR2, 113aR2.

2. The battery pack (100) of claim 1, wherein the shank (160S) of each of the plurality of fastening members (160) is in contact with the housing (110).

3. The battery pack (100) of claim 1, wherein a width of each of the plurality of ribs (111R, 112R, 113R) is in a range of 5 mm to 20 mm.

4. The battery pack (100) of claim 1, wherein the housing (110) includes a plurality of cavities (111C, 112C, 113C) interposed between the plurality of channels (111CH, 112CH, 113CH) and the plurality of ribs (111R, 112R, 113R), and
wherein the plurality of cavities (111C, 112C, 113C) are empty spaces extending in the first direction.

5. The battery pack (100) of claim 1, wherein a width of each of the plurality of first ribs (111aR1, 112aR1, 113aR1) in a second direction perpendicular to the first direction is a same as a width of each of the plurality of second ribs (111aR2, 112aR2, 113aR2) in the second direction.

6. The battery pack (100) of claim 1, wherein a width of each of the plurality of first ribs (111aR1, 112aR1, 113aR1) in a second direction perpendicular to the first direction is different from a width of each of the plurality of second ribs (111aR2, 112aR2, 113aR2) in the second direction.

7. The battery pack (100) of claim 1, wherein a width of each of the plurality of first ribs (111aR1, 112aR1, 113aR1) in a second direction perpendicular to the first direction is greater than a width of each of the plurality of second ribs (111aR2, 112aR2, 113aR2) in the second direction.

8. The battery pack (100) of claim 1, wherein the housing (110) includes a first plate (111) and a second plate (112) extending in the first direction and welded together, and
wherein each of the plurality of fastening members (160) is spaced apart from welded surfaces (JS1b) of the first and second plates (111, 112).

9. The battery pack (100) of claim 1, wherein the plurality of fastening members (160) are arranged in a matrix.

10. The battery pack (100) of claim 1, wherein the plurality of fastening members (160) are arranged in a zigzag shape.

11. The battery pack (100) of claim 1, wherein the housing (110) includes a plurality of screw thread receiving parts that are in contact with screw threads (160T) of the plurality of fastening members (160).

12. The battery pack (100) of claim 11,
wherein the plurality of screw thread receiving parts are at a same level as the plurality of channels (111CH, 112CH, 113CH).

## Patentansprüche

1. Batteriepack (100), umfassend:
ein Gehäuse (110) mit einem Plattenteil (110P);
eine Vielzahl von Batterievorrichtungen (120) auf einer ersten Seite des Plattenteils (110P) des Gehäuses (110);
eine Abdeckplatte (150) auf einer zweiten Seite des Plattenteils (110P) des Gehäuses (110); und
eine Vielzahl von Befestigungselementen (160), die dazu konfiguriert sind, die Abdeckplatte (150) und das Gehäuse (110) zu fixieren,
wobei jedes der Vielzahl von Befestigungselementen (160) einen Kopfteil (160H) und einen Schaft (160S) enthält, wobei ein Durchmesser des Schafts (160S) kleiner ist als ein Durchmesser des Kopfteils (160H), und
wobei der Kopfteil (160H) jedes der Vielzahl von Befestigungselementen (160) in Kontakt mit der Abdeckplatte (150) steht,
wobei das Gehäuse (110) eine Vielzahl von Kanälen (111CH, 112CH, 113CH) enthält, die dazu konfiguriert sind, das Durchströmen eines Fluids zu ermöglichen, und sich in einer ersten Richtung parallel zu der ersten Seite des Plattenteils (110P) erstrecken, und eine Vielzahl von Rippen (111R, 112R, 113R) enthält, die zwischen der Vielzahl von Kanälen (111CH, 112CH, 113CH) angeordnet sind und sich in der ersten Richtung erstrecken,
wobei die Vielzahl von Befestigungselementen (160) zwischen der Vielzahl von Kanälen (111CH, 112CH, 113CH) angeordnet und mit der Vielzahl von Rippen (111R, 112R, 113R) gekoppelt ist,
**dadurch gekennzeichnet, dass** das Gehäuse (110) eine Vielzahl von ersten Rippen (111aR1, 112aR1, 113aR1) und eine Vielzahl von zweiten Rippen (111aR2, 112aR2, 113aR2) enthält, die zwischen der Vielzahl von Kanälen (111CH, 112CH, 113CH) angeordnet sind und sich in der ersten Richtung erstrecken, und
wobei jedes der Vielzahl von Befestigungselementen (160) mit einer entsprechenden ersten Rippe (111aR1, 112aR1, 113aR1) aus der Vielzahl von ersten Rippen (111aR1, 112aR1, 113aR1) gekoppelt ist, und
wobei jedes der Vielzahl von Befestigungselementen (160) von der Vielzahl von zweiten Rippen (111aR2, 112aR2, 113aR2) beabstandet ist.

2. Batteriepack (100) nach Anspruch 1, wobei der Schaft (160S) jedes der Vielzahl von Befestigungselementen (160) in Kontakt mit dem Gehäuse (110) steht.

3. Batteriepack (100) nach Anspruch 1, wobei eine Breite jeder der Vielzahl von Rippen (111R, 112R, 113R) in einem Bereich von 5 mm bis 20 mm liegt.

4. Batteriepack (100) nach Anspruch 1, wobei das Gehäuse (110) eine Vielzahl von Hohlräumen (111C, 112C, 113C) enthält, die zwischen der Vielzahl von Kanälen (111CH, 112CH, 113CH) und der Vielzahl von Rippen (111R, 112R, 113R) angeordnet sind, und
wobei die Vielzahl von Hohlräumen (111C, 112C, 113C) leere Räume sind, die sich in der ersten Richtung erstrecken.

5. Batteriepack (100) nach Anspruch 1, wobei eine Breite jeder der Vielzahl von ersten Rippen (111aR1, 112aR1, 113aR1) in einer zweiten Richtung senkrecht zu der ersten Richtung gleich einer Breite jeder der Vielzahl von zweiten Rippen (111aR2, 112aR2, 113aR2) in der zweiten Richtung ist.

6. Batteriepack (100) nach Anspruch 1, wobei eine Breite jeder der Vielzahl von ersten Rippen (111aR1, 112aR1, 113aR1) in einer zweiten Richtung senkrecht zu der ersten Richtung von einer Breite jeder der Vielzahl von zweiten Rippen (111aR2, 112aR2, 113aR2) in der zweiten Richtung verschieden ist.

7. Batteriepack (100) nach Anspruch 1, wobei eine Breite jeder der Vielzahl von ersten Rippen (111aR1, 112aR1, 113aR1) in einer zweiten Richtung senkrecht zu der ersten Richtung größer ist als eine Breite jeder der Vielzahl von zweiten Rippen (111aR2, 112aR2, 113aR2) in der zweiten Richtung.

8. Batteriepack (100) nach Anspruch 1, wobei das Gehäuse (110) eine erste Platte (111) und eine zweite Platte (112) enthält, die sich in der ersten Richtung erstrecken und miteinander verschweißt sind, und
wobei jedes der Vielzahl von Befestigungselementen (160) von Schweißflächen (JS1b) der ersten und zweiten Platten (111, 112) beabstandet ist.

9. Batteriepack (100) nach Anspruch 1, wobei die Vielzahl von Befestigungselementen (160) in einer Matrix angeordnet ist.

10. Batteriepack (100) nach Anspruch 1, wobei die Vielzahl von Befestigungselementen (160) in einer Zickzackform angeordnet ist.

11. Batteriepack (100) nach Anspruch 1, wobei das Gehäuse (110) eine Vielzahl von Gewindeaufnahmeteilen enthält, die in Kontakt mit Gewinden (160T) der Vielzahl von Befestigungselementen (160) stehen.

12. Batteriepack (100) nach Anspruch 11, wobei die Vielzahl von Gewindeaufnahmeteilen auf gleicher Höhe wie die Vielzahl von Kanälen (111CH, 112CH, 113CH) liegt.

## Revendications

1. Bloc-batterie (100) comprenant :
un boîtier (110) ayant une partie de plaque (110P) ;
une pluralité de dispositifs de batterie (120) sur un premier côté de la partie de plaque (110P) du boîtier (110) ;
une plaque de couverture (150) sur un second côté de la partie de plaque (110P) du boîtier (110) ; et
une pluralité d'organes de fixation (160) configurés pour fixer la plaque de couverture (150) et le boîtier (110),
dans lequel chacun de la pluralité d'organes de fixation (160) comprend une partie de tête (160H) et une tige (160S), un diamètre de la tige (160S) étant inférieur à un diamètre de la partie de tête (160H), et
dans lequel la partie de tête (160H) de chacun de la pluralité d'organes de fixation (160) est en contact avec la plaque de couverture (150),
dans lequel le boîtier (110) comprend une pluralité de canaux (111CH, 112CH, 113CH) configurés pour permettre à un fluide de s'écouler à travers eux et s'étendant dans une première direction parallèle au premier côté de la partie de plaque (110P) et une pluralité de nervures (111R, 112R, 113R) interposées entre la pluralité de canaux (111CH, 112CH, 113CH) et s'étendant dans la première direction,
dans lequel la pluralité d'organes de fixation (160) sont interposés entre la pluralité de canaux (111CH, 112CH, 113CH) et sont couplés à la pluralité de nervures (111R, 112R, 113R),
**caractérisé en ce que** le boîtier (110) comprend une pluralité de premières nervures (111aR1, 112aR1, 113aR1) et une pluralité de secondes nervures (111aR2, 112aR2, 113aR2) qui sont interposées entre la pluralité de canaux (111CH, 112CH, 113CH) et s'étendant dans la première direction, et
dans lequel chacun de la pluralité d'organes de fixation (160) est couplé à une première nervure (111aR1, 112aR1, 113aR1) correspondante parmi la pluralité de premières nervures (111aR1, 112aR1, 113aR1), et
dans lequel chacun de la pluralité d'organes de fixation (160) est espacé de la pluralité de secondes nervures (111aR2, 112aR2, 113aR2).

2. Bloc-batterie (100) selon la revendication 1, dans lequel la tige (160S) de chacun de la pluralité d'organes de fixation (160) est en contact avec le boîtier (110).

3. Bloc-batterie (100) selon la revendication 1, dans lequel une largeur de chacune de la pluralité de nervures (111R, 112R, 113R) est comprise dans une plage allant de 5 mm à 20 mm.

4. Bloc-batterie (100) selon la revendication 1, dans lequel le boîtier (110) comprend une pluralité de cavités (111C, 112C, 113C) interposées entre la pluralité de canaux (111CH, 112CH, 113CH) et la pluralité de nervures (111R, 112R, 113R), et
dans lequel la pluralité de cavités (111C, 112C, 113C) sont des espaces vides s'étendant dans la première direction.

5. Bloc-batterie (100) selon la revendication 1, dans lequel une largeur de chacune de la pluralité de premières nervures (111aR1, 112aR1, 113aR1) dans une seconde direction perpendiculaire à la première direction est identique à une largeur de chacune de la pluralité de secondes nervures (111aR2, 112aR2, 113aR2) dans la seconde direction.

6. Bloc-batterie (100) selon la revendication 1, dans lequel une largeur de chacune de la pluralité de premières nervures (111aR1, 112aR1, 113aR1) dans une seconde direction perpendiculaire à la première direction est différente d'une largeur de chacune de la pluralité de secondes nervures (111aR2, 112aR2, 113aR2) dans la seconde direction.

7. Bloc-batterie (100) selon la revendication 1, dans lequel une largeur de chacune de la pluralité de premières nervures (111aR1, 112aR1, 113aR1) dans une seconde direction perpendiculaire à la première direction est supérieure à une largeur de chacune de la pluralité de secondes nervures (111aR2, 112aR2, 113aR2) dans la seconde direction.

8. Bloc-batterie (100) selon la revendication 1, dans lequel le boîtier (110) comprend une première plaque (111) et une seconde plaque (112) s'étendant dans la première direction et soudées ensemble, et
dans lequel chacun de la pluralité d'organes de fixation (160) est espacé de surfaces soudées (JS1b) des première et seconde plaques (111, 112).

9. Bloc-batterie (100) selon la revendication 1, dans lequel la pluralité d'organes de fixation (160) sont disposés en matrice.

10. Bloc-batterie (100) selon la revendication 1, dans lequel la pluralité d'organes de fixation (160) sont disposés en zigzag.

11. Bloc-batterie (100) selon la revendication 1, dans lequel le boîtier (110) comprend une pluralité de parties de réception de filetage de vis qui sont en contact avec des filetages de vis (160T) de la pluralité d'organes de fixation (160).

12. Bloc-batterie (100) selon la revendication 11, dans lequel la pluralité de parties de réception de filetage de vis sont au même niveau que la pluralité de canaux (111CH, 112CH, 113CH).
